# EUROPÄISCHE PATENTSCHRIFT

(11) **EP 0 692 334 B1**
(45) Veröffentlichungstag und Bekanntmachung des Hinweises auf die Patenterteilung: **31.03.1999**
(21) Anmeldenummer: 95110322.5
(22) Anmeldetag: 03.07.1995
(51) Int. Cl.: B23K 11/06

(54) **Verfahren und Vorrichtung zum Rollnaht-Schweissen von Behältern**
Process, apparatus for roll seam welding of cans
Méthode, appareil pour le soudage par rouleaux de réservoirs

(30) Priorität: 11.07.1994 CH 2215/94; 24.08.1994 CH 2586/94
(43) Veröffentlichungstag der Anmeldung: 17.01.1996
(73) Patentinhaber: ELPATRONIC AG, CH-6303 Zug (CH)
(72) Erfinder: Taiana, Peter, CH-5053 Staffelbach (CH)

(56) Entgegenhaltungen:
- EP-A- 0 166 149
- EP-A- 0 284 455
- DE-A- 2 604 584
- DE-A- 2 812 415
- US-A- 3 305 662

## Beschreibung

Die Erfindung betrifft ein Verfahren gemäss Oberbegriff des Anspruchs 1. Ferner betrifft die Erfindung eine Vorrichtung gemäss Oberbegriff des Anspruchs 12.

Mit Feinblechen oder Feinstblechen sind Bleche von ca. 0,1 bis 0,5 mm Dicke gemeint. Diese können verzinnt sein (sog. Weissblech) oder können mit anderen Beschichtungen versehen sein oder können unbeschichtet sein (Schwarzblech). Es ist bekannt, besonders Weissblech-Behälter und insbesondere Dosenzargen, mit überlappender Schweissnaht unter Verwendung einer Kupferdraht-Zwischenelektrode zu schweissen. Dies hat sich bis heute als einziges technisch und wirtschaftlich erfolgreiches Verfahren erwiesen, da die Zinnauflage des Bleches zu einer starken Elektrodenverschmutzung führt, was im industriellen Gebrauch nur mit der sich ständig erneuernden Kupferdrahtelektrode beherrschbar ist.

Es ist auch schon untersucht worden, ob das Rollnahtschweissen bei einer Ueberlappnaht drahtlos mit Wolfram oder Molybdän-Schweissrollen erfolgen kann (Paul Schindele, Untersuchungen zum Schweissverhalten von Wolfram- und Molybdän-Legierungen beim Widerstands-Rollennahtschweissen von elektrolytisch verzinntem Feinstblech, Dissertation an der Technischen Universität München, 1983; Zusammenfassung erschienen in "neue verpackung 5/84"). In die Praxis hat ein solches Verfahren keinen Eingang gefunden.

Beim Schweissen von Rohren aus Stahl ist es bekannt, diese mittels Rollnahtschweissung stumpf zu schweissen, wobei hier Elektrodenrollen aus Kupfer verwendet werden können, da keine Verzinnung vorhanden ist. Die Wanddicke derart geschweisster Stahlrohre beträgt minimal 0,4 mm und es muss über Druckrollen seitlich der Naht eine hohe Kraft auf das Rohr ausgeübt werden (Deutscher Verband für Schweisstechnik e.V., Merkblatt DVS 2911). Für das Schweissen von Zargen aus verzinntem Feinstblech (Dicke z.B. ca. 0,19 mm) bei welchem wesentlich andere Verhältnisse vorliegen und bei welchem im Gegensatz zum Rohr auch keine kontinuierliche Naht erzeugt wird, wurde bisher aus der Technik des Stahlrohrschweissens keine Anregung gewonnen.

EP-A-0 284 455 zeigt das Stumpfschweissen mit innerhalb der Dosenzarge angeordneten Elektrodenschienen. Bei verzinnten Blechen kann eine unerwünschte Zinnablagerung auf den Elektrodenschienen erfolgen, was eine flüssigkeitsdichte Schweissung der Stumpfnaht erschwert oder unmöglich macht. US-A-3 305 662 zeigt das Stumpfschweissen von Rohren neben dem Ueberlappschweissen von Zargen. DE-A-26 04 584 zeigt das formgebende Schleifen von Scheibenelektroden beim Rohrschweissen.

Da das Schweissen mit Kupferdraht-Elektroden zwar ausgezeichnete Ergebnisse erbringt, aber den Nachteil des hohen Kupferdrahtaufwandes hat, besteht die Aufgabe, auch für das Schweissen von Behältern aus Feinstblech und insbesondere Weissblech ein industriell anwendbares Verfahren zu schaffen, welches diesen Nachteil nicht aufweist.

Dies wird erfindungsgemäss mit den Merkmalen des Anspruchs 1 bzw. 12 erreicht.

Ueberraschenderweise hat es sich gezeigt, dass auf diese Weise das Stumpfschweissen und insbesondere das drahtlose Stumpfschweissen von verzinnten Feinstblechen möglich ist und eine dichte Naht erzielt werden kann. Es hat sich ferner gezeigt, dass sich durch das Stumpfschweissen eine Reduktion der Zinnablagerung auf den Elektrodenrollen ergibt, da die Elektroden (im Gegensatz zur Ueberlappungsnaht) so angeordnet werden können, dass die Kontakttemperatur Elektrode-Blech im wesentlichen unterhalb des Zinnschmelzpunktes verbleibt. Es hat sich ferner gezeigt, dass die zugeführte Schweissleistung im Vergleich mit der Ueberlappungsnaht reduziert werden kann, was eine geringere thermische Kontaktbelastung ergibt.

Es werden ferner die Elektroden stetig oder nur zeitweise gereinigt, um eventuelle Zinnverschmutzungen zu beseitigen.

Bevorzugterweise wird der Schweissstrom, der in der Regel ein Wechselstrom ist, so gesteuert, dass der Schweissstrom am Ende der Schweissnaht reduziert wird. Dies kann auch am Anfang der Schweissnaht der folgenden Zarge vorteilhaft sein.

Die Vorrichtung zur Durchführung des Verfahrens ist durch die Merkmale des Anspruchs 12 gekennzeichnet.

Im folgenden werden Ausführungsbeispiele der Erfindung anhand der Zeichnungen näher erläutert; dabei zeigt
Figur 1 schematisch eine Teilansicht einer Dosenzarge beim Schweissvorgang;
Figur 2 eine vergrösserte Detailansicht des Schweissbereichs mit der Darstellung des Stromflusses;
Figur 3 eine weitere Detailansicht des Schweissbereichs;
Figur 4 eine teilweise Darstellung der Elemente einer Vorrichtung zum drahtlosen Schweissen;
Figur 5 eine teilweise vertikal geschnittene Ansicht der Rollenköpfe an der Schweissstelle.

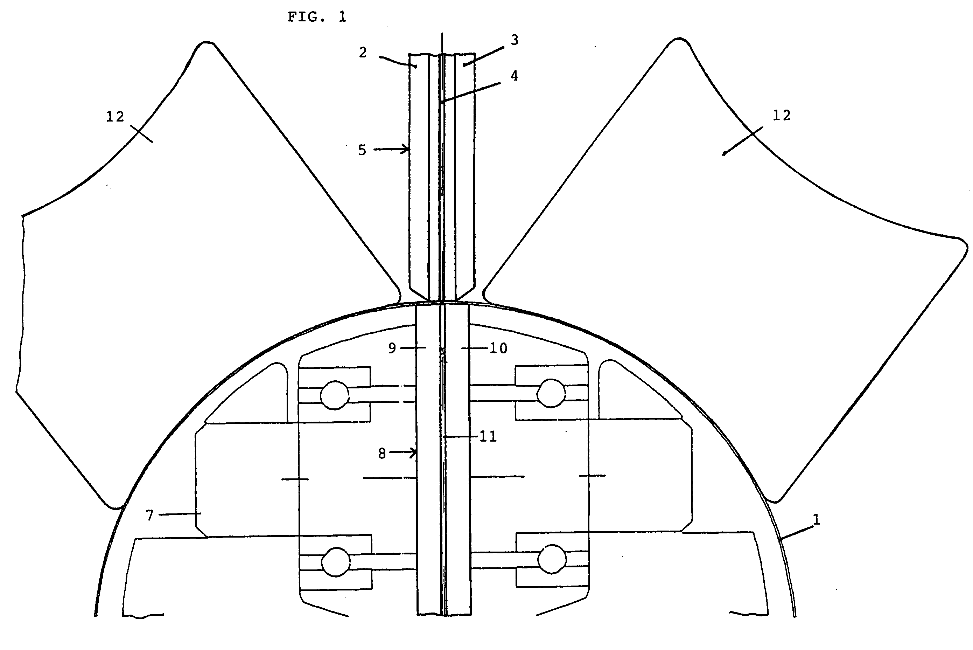

Figur 1 zeigt schematisch eine nur teilweise dargestellte Dosenzarge 1, welche mittels Rollnahtschweissung stumpfgeschweisst wird. Die Rollnahtschweissung erfolgt mittels zweier Elektroden 2 bzw. 3, welche durch eine Isolation 4 voneinander getrennt sind und eine ausserhalb der Zarge angeordnete Schweissrolle 5 bilden. Innerhalb der Zarge 1 ist an einem Tragarm 7 eine innere Rolle 8 drehbar gelagert. Diese Rolle 8 ist nicht stromführend. Im dargestellten Beispiel besteht die Rolle 8 aus zwei Scheiben 9 und 10 aus einem harten metallischen Werkstoff und einer mittleren Isolationsschicht 11. Ferner sind ausserhalb der Zarge in an sich bekannter Weise Kalibrierrollen 12 angeordnet, welche die Rundheit der Zarge sicherstellen. Neben den dargestellten Kalibrierrollen 12 sind dabei in der Regel noch weitere, in der Zeichnung nicht ersichtliche Kalibrierrollen entlang des Umfangs der Zarge 1 vorgesehen. Die Zarge wird so zwischen die Schweissrolle 5 und die Gegenrolle 8 geführt, dass sich die Zargenkanten stumpf, nichtüberlappend, gegenüberliegen. Dies kann durch geeignete Führungsschienen (sog. Z-Schienen) erfolgen, welche an sich vom Bilden einer Ueberlappungsnaht her bekannt sind und welche daher hier nicht weiter dargestellt werden, welche aber hier so eingestellt sind, dass sich keine Ueberlappung ergibt, sondern ein stumpfes Aneinanderdrücken der beiden Zargenlängsbereiche. Es ergibt sich dabei eine H-förmige Schiene. Die Führungsschiene kann dabei die Zargenenden so zusammenführen, dass diese auf gleicher Höhe liegen und noch einen geringen Restabstand von z.B. 0,1 mm aufweisen. Das Aneinanderliegen der zu verschweissenden Zargenlängsbereiche kann dann durch die Kalibrierrollen erfolgen.

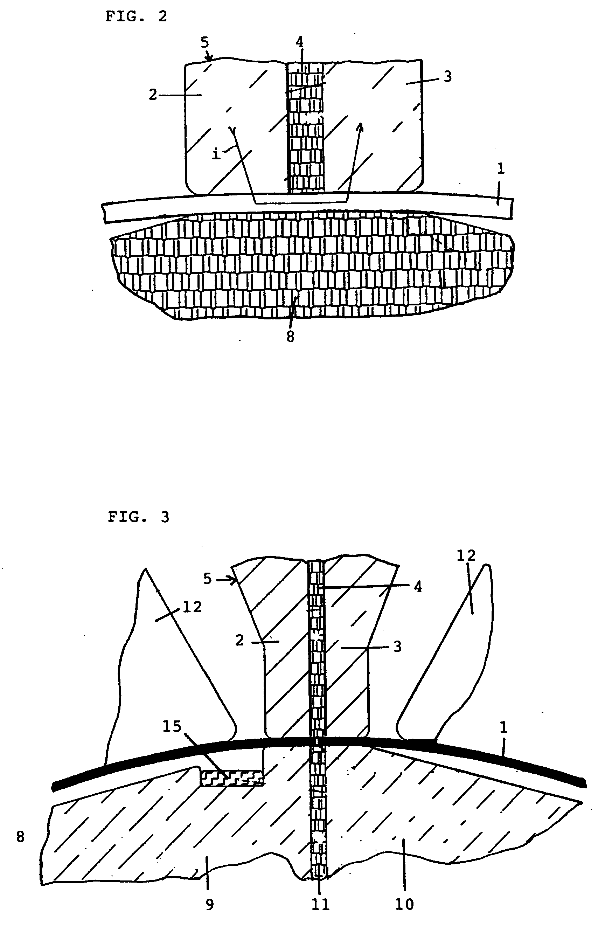

Figur 2 zeigt schematisch den Schweissbereich beim Stumpfschweissen einer Zarge 1 in vergrösserter Darstellung. Dabei sind wiederum die beiden Elektroden 2 und 3 mit der dazwischenliegenden Isolation 4 ersichtlich, welche zusammen die aussenliegende Schweissrolle 5 bilden. Die Innenrolle 8 ist in dem hier gezeigten Beispiel einteilig und besteht aus einem isolierenden Material, z.B. aus Keramik. In Figur 2 ist nun die Stossstelle des Zargenblechs ersichtlich und es ist ferner schematisch der Stromfluss i durch die Stumpfnaht dargestellt. Es ist ersichtlich, dass beim Stumpfschweissen auf diese Weise die hohe Schweisstemperatur hauptsächlich im Bereich der Stumpfnaht erzeugt wird. Der Stromübergang von den Elektroden 2 und 3 auf das Blech der Zarge 1 erfolgt dahingegen seitlich vom eigentlichen Schweissbereich, d.h. ausserhalb des Bereichs höchster Temperatur. Dies ist ein Gegensatz zum bekannten Ueberlappungsnahtschweissen mittels Kupferdrahtelektrode und bewirkt, dass die Rollenelektrode 5 relativ wenig mit Zinn verschmutzt wird, da das Zinn im wesentlichen nur im Bereich der Stumpfnaht selber aufgeschmolzen wird.

Die Schweissparameter für eine derartige Stumpfschweissung haben sich als recht unkritisch erwiesen. Es können die üblichen Zargen-Feinstbleche mit elektrolytischer Zinnbeschichtung in einer Dicke von ca. 0,2 mm verwendet werden. Die Schweisskraft kann in einem weiten Bereich frei gewählt werden und beträgt z.B. 500 N. Der Schweissstrom kann z.B. im Bereich von 2 kA liegen und die Schweissfrequenz im Bereich von mehreren 100 Hz, z.B. 650 Hz. Die Stromform des Schweissstroms kann ebenfalls frei gewählt werden z.B. als sinusförmig. Auf diese Weise lassen sich mit der gezeigten Anordnung mit hoher Schweissgeschwindigkeit (z.B. mit Schweissgeschwindigkeit höher als 80 m/Min.) dichte Stumpfschweissnähte an Dosenzargen erzielen.

Figur 3 zeigt eine weitere Ausführungsform der Schweissung. Dabei ist wiederum die Zarge 1 nur teilweise dargestellt und es sind obere Elektroden 2 und 3 vorgesehen, welche mit der isolierenden Zwischenlage 4 den oberen Rollenkopf 5 bilden. Ebenfalls nur teilweise ersichtlich sind die Kalibrierrollen 12. Der untere Rollenkopf 8 im Innern der Zarge ist hier mehrteilig aufgebaut und weist für gute Verschleisseigenschaften einen ersten Stahlring 9 und einen zweiten Stahlring 10 auf, welche durch eine elektrisch isolierende Zwischenlage 11, z.B. aus Keramik, voneinander getrennt sind. In diesem Fall ist der untere Rollenkopf drehbar angetrieben, wobei zu dessen Antrieb ein Band 15 vorgesehen ist, welches von einem nicht dargestellten Motor angetrieben wird, so dass sich der untere Rollenkopf 8 synchron mit dem Zargenvorschub bewegt. Damit kann der Schlupf des Zargentransportes verringert werden. Die Schweissparameter bei dieser Ausführungsform können gleich gewählt werden wie bereits angegeben.

Die isolierenden Zwischenlagen 4 und 11 bzw. der untere Rollenkopf 8 können - wie in den Figuren 2 und 3 gezeigt - im Schweissnahtbereich am Blech der Zarge 1 anliegen, wodurch die Kanten der Zarge genau bündig gehalten werden. Alternativ ist es möglich, die Zwischenlagen bzw. den unteren Rollenkopf so auszubilden, dass gerade im Bereich der Naht kein Anliegen der Zwischenlagen bzw. des unteren Rollenkopfes erfolgt. Die jeweilige Zwischenlage bzw. der untere Rollenkopf 8 kann also z.B. gerade im unmittelbaren Nahtbereich mit einer umlaufenden Nut versehen sein. Der Vorteil dieser Alternative liegt darin, dass die Zinnaufnahme der Zwischenlage bzw. des unteren Rollenkopfes noch weiter vermindert werden kann. Der Querschnitt der Nut kann dabei z.B. halbkreisförmig, dreieckig oder rechteckig sein. Es wäre auch möglich, die Zwischenlagen 4, 11 auf ihrer ganzen Breite zwischen den Elektroden zurückzuversetzen, doch ergibt sich damit eine schlechtere gegenseitige Führung der Kanten im Schweissnahtbereich.

Vorzugsweise die obere, stromeinbringende Schweissrolle 5 mit den beiden Elektroden 2 und 3 und auch die untere Rolle 8 können jeweils mit einer Innenkühlung, z.B. mit einer Wasserkühlung versehen sein. Diese Massnahme bewirkt eine weitere Minderung des Verschleisses und des Zinnabtrages bzw. der Verunreinigung der Elektroden.

Die Schweissrolle 5 mit den Elektroden 2 und 3 ist ferner mit einer Reinigungsvorrichtung versehen sein, welche gelegentlich oder dauernd das Abtragen allfälliger Zinnverschmutzungen ermöglicht. Zu diesem Zwecke kann die Reinigungsvorrichtung entsprechende Schab- oder Schleifmittel aufweisen. Auch die Zwischenlagen bzw. der untere Rollenkopf können derart gereinigt werden.

Die Materialien des oberen Rollenkopfes mit den Schweisselektroden bzw. diejenigen des unteren Rollenkopf können aus einer grossen Gruppe von geeigneten Materialien ausgewählt werden, wobei insbesondere auf die Verschleisseigenschaften zu achten ist, damit in der industriellen Anwendung eine hohe Anzahl von Schweissvorgängen erfolgen kann. Die Elektrodenrollen sind dabei aus einem Material mit einer Härte nach Vickers von vorzugsweise über 200 und bevorzugterweise über 300 gebildet. So kann für die Elektroden bevorzugterweise Titan-Zirkon-Molybdän (TZM) oder Wolfram-Thoriumoxid (WThO₂) verwendet werden und die Isolation zwischen den Elektroden kann vorzugsweise aus Keramikmaterial bestehen. Der untere Rollenkopf besteht vorzugsweise aus Stahl ECN35 mit einer Isolationszwischenlage aus Keramik, z.B. Aluminiumoxid oder Zirkonoxid. Der untere Rollenkopf kann bevorzugt auch aus Siliziumkarbid (SiC) oder aus Siliziumnitrid (Si₃N₄) gefertigt sein.

Vorzugsweise werden die Elektroden bzw. der Sekundärstromkreis mit einem Parallelwiderstand von 4,5 mOhm versehen, um eine Funkenbildung zwischen den Elektroden zwischen den Zargen zu verhindern. Auf diese Massnahme kann allenfalls verzichtet werden, wenn, wie bevorzugt, der Schweissstrom am Zargenende reduziert wird und allenfalls zwischen den einzelnen Zargen abgeschaltet wird.

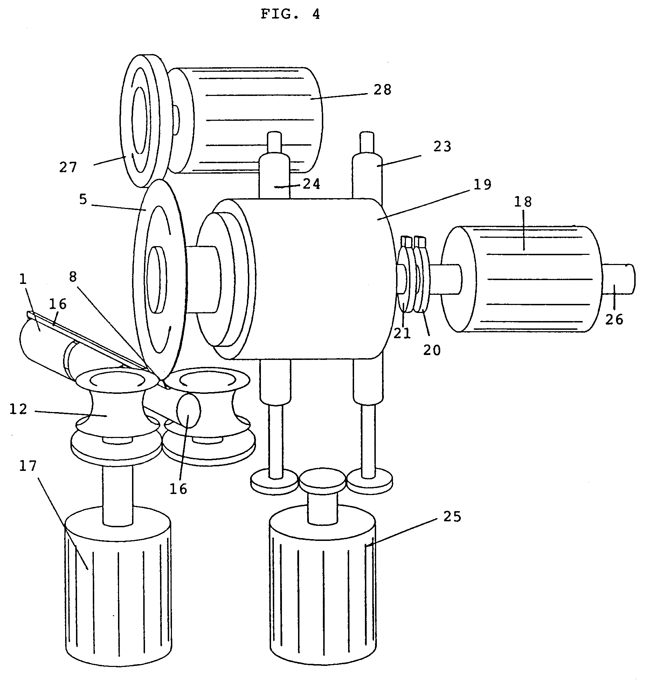

Figur 4 zeigt grob schematisch die Elemente einer Vorrichtung zur Durchführung des Verfahrens. Dabei werden die Zargen 1 auf einer Fördereinrichtung 16 zu der Schweissstelle gefördert. Dort sind die Zargen 1 von Kalibrierrollen 12 gehalten, wobei in der Regel mehr Kalibrierrollen vorgesehen sind als in Figur 4 der Einfachheit halber dargestellt. Die Kalibrierrollen können mit einem Antrieb 17 versehen sein, um in Förderrichtung der Zargen angetrieben zu werden. Die Schweissung erfolgt mittels des aussen an der Zarge befindlichen Rollenkopfes 5. Innen an der Zarge ist der bereits beschriebene, keine Elektroden tragende Rollenkopf 8 vorgesehen. Der Rollenkopf 5 wird durch einen Antriebsmotor 18 drehend angetrieben. Mit dem Rollenkopf 5 rotiert der Schweisstransformator 19, welcher die Primärspannung in die Sekundärschweissspannung umsetzt. Solche rotierenden Schweisstransformatoren sind bekannt, weshalb der gezeigte Transformator 19 hier nicht weiter erläutert wird. Die Uebertragung der Primärspannung auf den sich drehenden Transformator erfolgt mittels Schleifkontakten 20, 21. Die Anordnung von Rollenkopf 5, Schweisstransformator 19 und Antriebsmotor 18 ist gemeinsam höhenverstellbar, um die Elektroden am Rollenkopf 5 bei Verschleiss nachführen zu können. Zu diesem Zweck sind Vertikalführungen 23, 24 vorgesehen, welche z.B. Spindeltriebe sein können, die von einem Antriebsmotor 25 angetrieben werden, um die Höhenlage der Elektroden einzustellen. Die Wasserinnenkühlung des Rollenkopfes 5 kann mit einer Wasserdurchführung 26 bewerkstelligt werden, welche zentral durch den Motor und den Schweisstransformator hindurch erfolgt. Die bereits erwähnte Nachbearbeitung bzw. Reinigung der Elektroden kann z.B. mittels einer Schleifscheibe 27 erfolgen, die von einem Motor 28 angetrieben wird. Das Schleifen kann kontinuierlich oder diskontinuierlich nur bei Bedarf erfolgen. Die Abtragung von Verunreinigungen und Elektrodenmaterial mittels der Schleifscheibe 27 kann jeweils durch die Vertikalverstellbarkeit des Rollenkopfes 5 mittels des Antriebs 23, 24, 25 kompensiert werden.

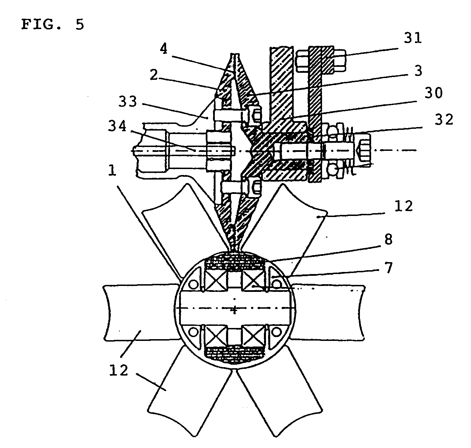

Figur 5 zeigt eine Schnittansicht einer anderen Ausführungsform der Vorrichtung mit einem Rollenkopf 5, der ebenfalls zwei Elektroden 2 bzw. 3 und eine isolierende Zwischenlage 4 aufweist. Der Rollenkopf 5 ist hier an einer Schwinge 30 angeordnet und es ist eine Stromzuführung 31 für die Elektrode 3 vorgesehen, welche über einen Schleifkontakt 32 erfolgt. Der Antrieb des Rollenkopfes 5 erfolgt durch einen nicht gezeigten Antriebsmotor, der einen Flansch 33 antreibt. Die Zuführung von Kühlwasser kann zentral über eine Bohrung 34 erfolgen. Die Innenrolle 8 ist hier von einer Keramikrolle gebildet und es sind eine Vielzahl von Kalibrierrollen 12 vorgesehen, um die Zarge in der richtigen Position zu halten.

Obschon die Erfindung anhand von Weissblech (verzinntem Feinstblech) erläutert worden ist, ist dies nur als besonders bevorzugtes Beispiel zu verstehen. Die Erfindung kann auch bei anders beschichteten und unbeschichteten Feinstblechen angewandt werden.

Dabei kann es allenfalls vorteilhaft sein stumpf, aber unter Anwendung einer Draht-Zwischenelektrode, zu schweissen.

## Patentansprüche

1. Verfahren zur Rollnaht-Widerstandsschweissung von Feinstblech-Behältern, insbesondere von Dosenzargen, bei dem die Behälternaht stumpf und vorzugsweise drahtlos verschweisst wird, dadurch gekennzeichnet, dass die Schweisselektroden (2,3) behälteraussenseitig beidseits der zu bildenden Stumpfnaht angeordnet sind, dass behälterinnenseitig eine elektrodenlose Rolle (8) sich über die Stumpfnaht erstreckt, dass die Schweisselektroden (2,3) mit einer elektrisch isolierenden Zwischenlage (4) zu einer Schweissrolle (5) zusammengefasst sind, die mittels eines Antriebs drehend angetrieben wird, und dass mindestens die Elektroden durch eine Reinigungseinrichtung kontinuierlich oder diskontinuierlich gereinigt werden.

2. Verfahren nach Anspruch 1, dadurch gekennzeichnet, dass die Innenrolle aus isolierendem Material, insbesondere Keramik, gebildet ist.

3. Verfahren nach Anspruch 1, dadurch gekennzeichnet, dass die Innenrolle aus metallenen Scheiben (9,10) mit einer elektrisch isolierenden Zwischenschicht (11) gebildet ist.

4. Verfahren nach einem der Ansprüche 1 bis 3, dadurch gekennzeichnet, dass die Innenrolle drehend angetrieben wird.

5. Verfahren nach Anspruch 1, dadurch gekennzeichnet, dass die Elektroden durch Schaben oder Schleifen gereinigt werden.

6. Verfahren nach einem der Ansprüche 1 bis 5, dadurch gekennzeichnet, dass die Elektroden in ihrer Lage zur Schweissnaht nachführbar sind.

7. Verfahren nach einem der Ansprüche 1 bis 6, dadurch gekennzeichnet, dass der Schweissstrom am Ende der Schweissnaht reduziert wird.

8. Verfahren nach einem der Ansprüche 1 bis 7, dadurch gekennzeichnet, dass der Schweissstrom zwischen einzelnen zu schweissenden Behältern reduziert oder abgeschaltet wird.

9. Verfahren nach einem der Ansprüche 1 bis 8, dadurch gekennzeichnet, dass parallel zu den Schweisselektroden ein elektrischer Widerstand geschaltet ist.

10. Verfahren nach einem der Ansprüche 1 bis 9, dadurch gekennzeichnet, dass die zu schweissende Behälterzarge im Schweissbereich von mehreren Kalibrierrollen geführt wird, wobei mindestens eine dieser Rollen drehend angetrieben wird.

11. Verfahren nach einem der Ansprüche 1 bis 10, dadurch gekennzeichnet, dass die zu verschweissenden Behälterkanten durch eine Schiene mit Führungen für beide Kanten, insbesondere eine H-förmige Schiene, stumpf aneinanderstossend ausgerichtet werden.

12. Vorrichtung zum drahtlosen Rollnaht-Schweissen von Behälterzargen aus Feinstblech, vorzugsweise Weissblech, bei welcher die Zargen (1) durch eine Zuführeinrichtung mit stumpf gegenüberliegenden Nahtkanten den Schweissrollenköpfen (5,8) zuführbar sind, dadurch gekennzeichnet, dass ein drehbar antreibbarer erster Rollenkopf (5) mit zwei Elektroden (2,3) und eine Elektrodenreinigungseinrichtung vorgesehen sind, welche Reinigungseinrichtung die Elektroden kontinuierlich oder diskontinuierlich reinigt, und dass ein zweiter elektrodenloser Rollenkopf (8) vorgesehen ist..

13. Vorrichtung nach Anspruch 12, dadurch gekennzeichnet, dass die Elektrodenrollen aus einem Material mit einer Härte nach Vickers von grösser als 200, vorzugsweise grösser als 300 gebildet sind.

14. Vorrichtung nach Anspruch 13, dadurch gekennzeichnet, dass die Rollen aus Titan-Zirkon-Molybdän (TZM) oder aus Wolfram-Thoriumoxid (WThO₂) gebildet sind.

## Claims

1. Method for the roller seam welding of very thin sheet metal containers, in particular can bodies, in which the container seam is butt welded, preferably without the use of wire, characterized in that the welding electrodes (2, 3) are arranged outside the container on either side of the butt joint to be formed, in that on the inside of the container an electrodeless roller (8) extends across the butt joint, in that the welding electrodes (2, 3) are combined with an electrically insulating intermediate layer (4) to form a welding roller (5) which is driven in rotation by a drive, and in that at least the electrodes are continuously or intermittently cleaned by a cleaning device.

2. Method according to Claim 1, characterized in that the inner roller is formed from insulating material, in particular ceramic material.

3. Method according to Claim 1, characterized in that the inner roller is formed from metal discs (9, 10) with an electrically insulating intermediate layer (11).

4. Method according to any one of Claims 1 to 3, characterized in that the inner roller is driven in rotation.

5. Method according to Claim 1, characterized in that the electrodes are cleaned by scraping or grinding.

6. Method according to any one of Claims 1 to 5, characterized in that provision is made for correcting the position of the electrodes in relation to the weld seam.

7. Method according to any one of Claims 1 to 6, characterized in that the welding current is reduced at the end of the weld seam.

8. Method according to any one of Claims 1 to 7, characterized in that the welding current is reduced or switched off between individual containers to be welded.

9. Method according to any one of Claims 1 to 8, characterized in that an electrical resistance is connected parallel with the welding electrodes.

10. Method according to any one of Claims 1 to 9, characterized in that the container body to be welded is guided in the welding zone by a plurality of calibrating rollers, at least one of which is driven in rotation.

11. Method according to any one of Claims 1 to 10, characterized in that the container edges to be welded are butted together by a rail with guides for both edges, in particular an H-shaped rail.

12. Apparatus for the roller seam welding, without wire, of container bodies of very thin sheet metal, preferably tinplate, in which a device feeds the bodies (1) to the welding roller heads (5, 8) with their welding edges butted together, characterized in that a first roller head (5) which can be driven in rotation and has two electrodes (2, 3) and an electrode cleaning device are provided outside the container, the electrodes being cleaned continuously or intermittently by the said cleaning device, and in that a second, electrodeless roller head (8) is provided inside the container.

13. Apparatus according to Claim 12, characterized in that the electrode rollers are formed from a material with a Vickers hardness of over 200, and preferably over 300.

14. Apparatus according to Claim 13, characterized in that the rollers are formed from titanium-zirconium-molybdenum (TZM) or tungsten-thorium oxide (WThO₂).

## Revendications

1. Procédé de soudage par résistance, par molettes, de récipients en tôle extra-mince, en particulier de corps de boîtes, où la ligne de joint du récipient est soudée bout-à-bout et de préférence sans fil,
caractérisé en ce que les électrodes de soudage (2, 3) sont disposées des deux côtés de la ligne de soudure bout-à-bout à réaliser, du côté extérieur du récipient, en ce qu'à l'intérieur du récipient, une molette (8) sans électrode s'étend sur tout le joint de soudure bout-à-bout, en ce que les électrodes de soudage (2, 3) sont réunies avec une couche intermédiaire (4) électriquement isolante pour former une molette de soudage (5) qui est entraînée en rotation au moyen d'un entraînement, et en ce qu'au moins les électrodes sont nettoyées de façon continue ou discontinue par un dispositif de nettoyage.

2. Procédé selon la revendication 1, caractérisé en ce que la molette intérieure est réalisée en une matière isolante, notamment en céramique.

3. Procédé selon la revendication 1, caractérisé en ce que la molette intérieure est constituée de disques métalliques (9, 10) associés à une couche intermédiaire électriquement isolante (11).

4. Procédé selon l'une des revendications 1 à 3, caractérisé en ce que la molette intérieure est entraînée en rotation.

5. Procédé selon la revendication 1, caractérisé en ce que les électrodes sont nettoyées par raclage ou par meulage.

6. Procédé selon l'une des revendications 1 à 5, caractérisé en ce que la position des électrodes par rapport au joint de soudure est réglable.

7. Procédé selon l'une des revendications 1 à 6, caractérisé en ce que le courant de soudage est réduit à la fin d'un joint de soudure.

8. Procédé selon l'une des revendications 1 à 7, caractérisé en ce que le courant de soudage est réduit ou coupé entre les différents récipients à souder.

9. Procédé selon l'une des revendications 1 à 8, caractérisé en ce qu'une résistance électrique est branchée en parallèle avec les électrodes de soudage.

10. Procédé selon l'une des revendications 1 à 9, caractérisé en ce que le corps de récipient à souder est guidé, au niveau de la soudure, par plusieurs rouleaux de calibrage, l'un au moins de ces rouleaux étant entraîné en rotation.

11. Procédé selon l'une des revendications 1 à 10, caractérisé en ce que les bords à souder du récipient sont alignés en butée bout-à-bout l'un sur l'autre par un rail comportant des guides pour les deux bords, en particulier un rail en H.

12. Dispositif de soudage par molettes, sans fil, de corps de récipients en tôle extra-mince, de préférence en fer-blanc, où les corps de récipients (1) sont acheminés jusqu'aux têtes à molettes de soudage (5, 8) à travers un dispositif d'acheminement en positionnant les bords du joint bout-à-bout l'un en face de l'autre,
caractérisé en ce qu'une première tête à molette (5) pouvant être entraînée en rotation, comportant deux électrodes (2, 3), ainsi qu'un dispositif de nettoyage des électrodes, sont prévus du côté extérieur du récipient, le dispositif de nettoyage nettoyant les électrodes de façon continue ou discontinue,
et en ce qu'une deuxième tête à molette (8) sans électrodes est prévue du côté intérieur du récipient.

13. Dispositif selon la revendication 12, caractérisé en ce que les molettes électrodes sont réalisées en une matière présentant une dureté Vickers supérieure à 200, de préférence supérieure à 300.

14. Dispositif selon la revendication 13, caractérisé en ce que les molettes sont réalisées en titane-zirconium-molybdène (TZM) ou en thorine de tungstène (WThO₂).
